# EUROPÄISCHE PATENTSCHRIFT

(11) **EP 0 829 493 B1**
(45) Veröffentlichungstag und Bekanntmachung des Hinweises auf die Patenterteilung: **14.08.2002**
(21) Anmeldenummer: 97115089.1
(22) Anmeldetag: 01.09.1997
(51) Int. Cl.: C08F 32/00, C08F 4/80, C08F 4/70, C08G 61/08, C07F 15/04

(54) **Verwendung von Nickel-Katalysatoren zur Polymerisation von Cycloolefinen**
Use of nickel catalysts for polymerisation of cycloolefins
Utilisation de catalyseurs à base de nickel pour la polymérisation de cyclooléfines

(30) Priorität: 12.09.1996 DE 19637019
(43) Veröffentlichungstag der Anmeldung: 18.03.1998
(73) Patentinhaber: BAYER AG, 51368 Leverkusen (DE)
(72) Erfinder: Ostoja Starzewski, Karl-Heinz, Dr., 61118 Bad Vilbel (DE)

(56) Entgegenhaltungen:
- EP-A- 0 101 927
- EP-A- 0 193 047
- DE-A- 3 700 196

## Beschreibung

Die Erfindung betrifft die Verwendung von Nickel-Katalysatoren zur Polymerisation von Cycloolefinen.

Durch Polymerisation von Cycloolefinen, gegebenenfalls in Gegenwart von acyclischen Olefinen, zugängliche Polymerisate sind in jüngerer Zeit interessant geworden, weil neue optische Anwendungen immer höhere Anforderungen an das Eigenschaftsprofil der zu verwendenden Thermoplasten stellen. Polycycloolefine sind thermisch außerordentlich stabil und optisch isotrop, hochbeständig gegenüber Wasser und organischen Lösungsmitteln.

Aufgrund ihrer hohen optischen Transparenz, niedriger Doppelbrechung und hoher Erweichungstemperaturen eignen sich Cycloolefinhomo- und -copolymerisate besonders als Rohstoffe für die Herstellung von optischen Linsen und Lichtwellenleitern sowie als Informationsspeichermedien z.B. für Compact Disks.

In der Vergangenheit hat man versucht, Cycloolefine mit Hilfe von Ziegler-Systemen auf Basis von Titanverbindungen, Vanadiumverbindungen und Metallocenen zu polymerisieren, vgl. H. Cherdron et al., Angew. Makromol. Chem. 223 (1994), 121-133 und die dort zitierte Literatur. Da die Struktur- und Eigenschaftsvielfalt der erhaltenen Polycycloolefine mit der Zahl der für die Cycloolefinpolymerisation geeigneten Katalysatoren wächst und die bislang bekannten Polycycloolefine noch nicht alle Erwartungen erfüllen, bestand ein Bedarf an Cycloolefin-Polymerisationskatalysatoren, die sich von den bekannten Cycloolefin-Polymerisationskatalysatoren strukturell unterscheiden.

Die EP-A-445 755 beschreibt ein Verfahren zur Polymerisation von Cycloolefinen vom Norbornentyp in Gegenwart eines Katalysators auf Basis eines Übergangsmetalls der Gruppen Vb, VIb, VIIb oder VIII und eines Aluminoxans als Cokatalysator. Die bevorzugten Übergangsmetalle sind Nickel und Palladium. Die höchste Aktivität zeigt das Katalysatorsystem des Beispiels 1 (23,6 kg Polymer/g Nickel, bezogen auf 4 Stunden Polymerisationszeit). Für eine Polymerisation in technischem Maßstab wäre eine verbesserte Aktivität wünschenswert. Aus der WO 95/14 048 ist ein Verfahren zur Polymerisation von Cycloolefinen bekannt, wonach ein Katalysatorsystem auf Basis einer ionischen Übergangsmetall(VIII)-verbindung und eines Kettenübertragungsmittels verwendet wird. Die Polymerisation mit diesen Katalysatorsystemen erscheint zwar erfolgversprechend, aber für eine Anwendung in großtechnischem Maßstab sind die Katalysatoraktivitäten zu gering. Eine weitere Aufgabe der Erfindung bestand also darin, für die Polymerisation von Cycloolefinen geeignete Katalysatoren mit verbesserter Aktivität bereitzustellen.

Es wurde nun gefunden, daß ausgewählte Nickelverbindungen hochaktive Katalysatoren für die Polymerisation von Cycloolefinen sind: Das Gewichtsverhältnis von eingesetztem Katalysator zu erzeugtem Polymerisat wird extrem gering.

Gegenstand der Erfindung ist also die Verwendung von Umsetzungsprodukten aus
A. einer Nickel-(O)-Verbindung oder einer Verbindung, die in situ in eine Nickel-(O)-Verbindung übergeführt werden kann, mit gegebenenfalls
B. einer Verbindung der Formel 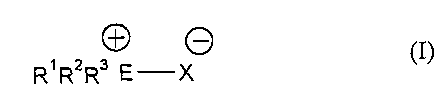 und (obligatorisch)
C. einer Verbindung der Formel 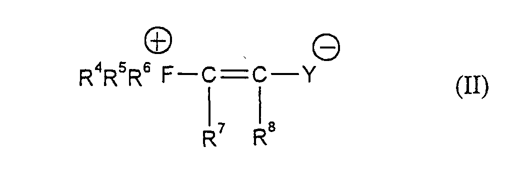 als Katalysatoren für die Polymerisation von Cycloolefinen,
   wobei
   - R¹ bis R⁶: unabhängig voneinander geradkettiges oder verzweigtes C₁-C₂₀-Alkyl, C₆-C₁₂-Aryl, C₁-C₂₀-Alkoxy, C₃-C₈-Cycloalkyl, C₂-C₂₀-Alkenyl, Di-(C₁-C₄-alkyl)-amino, C₆-C₁₂-Aryloxy, C₇-C₁₅-Aralkyl oder C₇-C₁₅-Aralkoxy,
   - E und F: unabhängig voneinander Stickstoff, Phosphor, Arsen oder Antimon,
   - X: Sauerstoff, Schwefel, =NR⁹, =CR⁹R¹⁰, =C=C=O, =C=C=S, =C=PR¹R²R³,
   - Y: Sauerstoff oder NR⁹,
   - R⁷, R⁸: unabhängig voneinander Wasserstoff, C₁-C₂₀-Alkyl, C₂-C₂₀-Alkenyl, C₁-C₂₀-Alkoxy, C₃-C₈-Cycloalkyl, C₆-C₁₂-Aryl, C₆-C₁₂-Aryloxy, C₆-C₁₂-Ar-C₁-C₂₀-alkyl, C₆-C₁₂-Ar-C₁-C₂₀-alkoxy, C₁-C₂₀-Alkyl-C₆-C₁₂-aryl, C₁-C₂₀-Alkyl-C₆-C₁₂-aryloxy, Chlor, Cyan, NHR¹², NR¹²₂, OR¹², COOR¹², COOR¹¹, CONR¹², COR¹², SR¹², SO₂R¹², OSO₂R¹², P(O)(OR¹²)_{2-y}R¹³_{y},
   - R⁷: zusätzlich SO₃R¹¹ oder
   - R⁷ und R⁸: gemeinsam mit den beiden C-Atomen, an die sie gebunden sind, einen iso- oder heterocyclischen Ring bilden,
   - R⁹ und R¹⁰: unabhängig voneinander R¹ oder Wasserstoff, Silyl, Acyl, Chlorphenyl, Nitrophenyl, C₁-C₆-Alkylphenyl, Cyano, Phenyl-C₂-C₆-alkenyl, Trihalogensilyl, Tri-C₁-C₃₀-organylsilyl, C₁-C₁₆-Acyl, Cyan, Halogen, Tri-C₁-C₃₀-organylstannyl, -BH₂, Di-C₁-C₂₀-organylboranyl, Dihalogenboranyl,
   - R¹¹: Alkalimetall, Thallium, 1/2 Erdalkalimetall, Ammonium, Phosphonium, C₁-C₁₂-Alkyl oder C₆-C₁₂-Aryl,
   - R¹², R¹³: unabhängig voneinander C₁-C₂₀-Alkyl, C₂-C₂₀-Alkenyl, C₃-C₈-Cycloalkyl oder C₆-C₁₂-Aryl und
   - y: Null, 1 oder 2
bedeuten.

Der Begriff **Alkyl** in den Definitionen von R¹ bis R¹³ steht für geradkettiges oder verzweigtes Alkyl mit vorzugsweise 1 bis 12, besonders bevorzugt 1 bis 6 und insbesondere 1 bis 4 Kohlenstoffatomen. Beispielhaft seien Methyl, Ethyl, n-Propyl, i-Propyl, n-Butyl, sec.-Butyl, i-Butyl, t-Butyl, n-Pentyl, i-Pentyl, t-Pentyl, Hexyl, i-Octyl, n-Decyl und n-Dodecyl genannt.

Der Begriff **Alkenyl** in den Definitionen von R¹ bis R¹³ steht für geradkettiges oder verzweigtes Alkenyl mit vorzugsweise 2 bis 18, besonders bevorzugt 2 bis 12 und ganz besonders bevorzugt 2 bis 6 Kohlenstoffatomen. Beispielhaft seien Vinyl, Allyl, Propenyl-(2), 1-Butenyl, 2-Butenyl, 3-Butenyl, Ethinyl, 1-Propinyl, 2-Propinyl, 1-Butinyl, 2-Butinyl, 3-Butinyl, Methallyl, Crotyl und Cinnamyl genannt.

Der Begriff **Cycloalkyl** in den Resten R¹ bis R¹³ steht für Cycloalkyl mit vorzugsweise 3 bis 7, insbesondere 3, 5 oder 6 Kohlenstoffatomen. Beispielhaft seien unsubstituiertes oder substituiertes Cyclopropyl, Cyclobutyl, Cyclopentyl, Cyclohexyl und Cycloheptyl genannt.

Der Begriff **Aryl** in den Resten R¹ bis R¹³ steht für unsubstituiertes oder substituiertes Aryl mit vorzugsweise 6 bis 10 C-Atomen im Arylteil. Bevorzugte Beispiele umfassen Phenyl und Naphthyl. Die Arylgruppen können 1 bis 3 Substituenten aus der Reihe Halogen (insbesondere Chlor und/oder Fluor), C₁-C₄-Alkoxy, Cyano, Nitro oder Amino tragen. Der Begriff **Aryl** schließt auch Hetaryl ein, wobei Hetaryl für gegebenenfalls einfach oder mehrfach, gleich oder verschieden substituiertes Hetaryl mit 1 bis 5 Kohlenstoffatomen und 1 bis 4 Heteroatomen aus der Reihe Sauerstoff, Schwefel, Stickstoff steht und an welches gegebenenfalls ein 5- bis 6-gliedriger, gesättigter oder ungesättigter Carbocyclus anelliert ist, wobei Hetaryl vorzugsweise für jeweils gegebenenfalls 1- bis 3-fach, gleich oder verschieden substituiertes Pyridyl, Pyrimidyl, Pyrazinyl, Chinolyl, Isochinolyl, Pyrrolyl, Indolyl, Pyrazolyl, Imidazolyl, Benzimidazolyl, Triazolyl, Thienyl, Benzothienyl, Furyl, Benzofuryl, Thiazolyl, Benzothiazolyl, Isothiazolyl, Oxazolyl, Benzoxazolyl, Isoxazolyl, Thiadiazolyl, Isothiadiazolyl, Oxadiazolyl oder Isoxadiazolyl steht, wobei als Hetarylsubstituenten genannt seien: Fluor, Chlor, Brom, Iod, Cyano, Nitro, Hydroxy, Mercapto, Amino, jeweils geradkettiges oder verzweigtes Alkoxy oder Alkylthio mit jeweils 1 bis 4 Kohlenstoffatomen, jeweils geradkettiges oder verzweigtes Halogenalkoxy oder Halogenalkylthio mit jeweils 1 bis 4 Kohlenstoffatomen und jeweils 1 bis 9 Fluor- und/oder Chloratomen, Phenyl, Phenoxy, Phenylthio, Phenyl-C₁-C₂-alkoxy oder Phenyl-C₁-C₂-alkylthio.

Der Begriff **Aralkyl** in den Resten R¹ bis R¹³ steht für Verbindungen mit vorzugsweise 1 bis 12, insbesondere 1 bis 6 C-Atomen im geradkettigen oder verzweigten Alkylteil und vorzugsweise Phenyl oder Naphthyl als Arylteil. Beispiele für solche Aralkylgruppen umfassen Benzyl, α-Methylbenzyl, α,α-Dimethylbenzyl, 2-Phenylethyl, α- und β-Naphthylmethyl. Diese Aralkylreste können 1 bis 3 Substituenten aus der Reihe Halogen (insbesondere Chlor und/oder Fluor), Nitro, Cyano, gegebenenfalls halogeniertes C₁-C₄-Alkyl oder -Alkoxy, wie beispielsweise Methyl, Ethyl, Trifluormethyl, Difluorchlormethyl, Difluormethyl, Trichlormethyl, Methoxy, Ethoxy, Trifluormethoxy, Difluorchlormethoxy oder Difluormethoxy, gegebenenfalls halogeniertes C₁-C₄-Alkylmercapto, wie beispielsweise Methylmercapto, Trifluormethylmercapto, Difluorchlormethylmercapto tragen.

Der Begriff **Alkylaryl** in den Resten R¹ bis R¹³ steht für die obengenannten Arylgruppen, die ihrerseits 1 bis 3 Substituenten aus der Reihe C₁-C₄-Alkyl, Halogen-C₁-C₂-alkyl (wie Trifluormethyl, Difluormethyl) tragen.

Der Begriff **Alkoxy** in den Resten R¹ bis R¹³ steht für geradkettiges und verzweigtes Alkoxy mit vorzugsweise 1 bis 6, insbesondere 1 bis 4 C-Atomen. Bevorzugte Beispiele umfassen Methoxy, Ethoxy, n- und i-Propoxy, n-, i-, sek.- und tert.-Butoxy sowie Hexoxy.

Der Begriff **Aryloxy** in den Resten R¹ bis R¹³ steht für Verbindungen mit vorzugsweise 1 bis 10 C-Atomen im Arylteil. Bevorzugte Beispiele sind Phenoxy und Naphthoxy. Die Aryloxygruppen können durch 1 bis 3 Substituenten aus der Reihe Halogen (vorzugsweise Chlor und/oder Fluor), C₁-C₄-Alkyl, Halogen-C₁-C₂alkyl (wie Di- und Trifluormethyl), Cyano, Nitro oder Amino tragen.

Der Begriff **Alkylamino** in den Resten R¹ bis R¹³ steht für Monoalkylamino- und Dialkylaminoreste mit vorzugsweise jeweils 1 bis 4 Kohlenstoffatomen in den jeweiligen geradkettigen oder verzweigten Alkylteilen, wobei im Falle von Dialkylamino die beiden Reste gegebenenfalls gemeinsam mit dem Stickstoffatom, an welches sie gebunden sind, einen 5- oder 6-gliedrigen, gesättigten Ring bilden, welcher gegebenenfalls ein Sauerstoff-, Schwefel- oder Stickstoffatom enthält, und welcher gegebenenfalls durch 1 oder 2 Methylgruppen substituiert ist, oder für jeweils geradkettiges oder verzweigtes Alkenyloxy oder Alkinyloxy mit jeweils 3 bis 4 Kohlenstoffatomen steht. Der Begriff **Alkylamino** umfaßt also beispielsweise Methyl- und Dimethylamino, Ethyl- und Diethylamino, n-Propyl- und Di-n-propylamino, i-Propyl- und Di-i-propylamino, Methylbutylamino, Ethylbutylamino, Pyrrolidino, Piperidino, Morpholino, Thiomorpholino, N-Methylpiperazino, 2,6-Dimethylmorpholino.

Der Begriff **Arylamino** in den Resten R¹ bis R¹³ steht für

-NR¹⁴R¹⁵

worin
- R¹⁴: für Wasserstoff oder C₁-C₁₂-Alkyl, vorzugsweise Wasserstoff oder Methyl, und
- R¹⁵: für Aryl oder Hetaryl mit vorzugsweise 3 bis 10 C-Atomen, insbesondere für
(i) Phenyl, das gegebenenfalls einfach bis fünffach, gleichartig oder verschieden substituiert ist durch Halogenalkyl, Halogenalkoxy, Halogenalkylthio, Halogenalkylsulfinyl oder Halogenalkylsulfonyl mit jeweils 1 oder 2 Kohlenstoffatomen und 1 bis 5 gleichen oder verschiedenen Halogenatomen, durch Halogen, Cyano, Nitro, Amino, Hydroxy, Carbamoyl und/oder Thiocarbamoyl sowie durch gegebenenfalls einfach bis vierfach durch Halogen und/oder Halogenmethyl substituiertes, zweifach verknüpftes Dioxyalkylen mit 1 oder 2 Kohlenstoffatomen, wobei die Sauerstoffatome nicht benachbart sind, beispielsweise unsubstituiertes Phenyl selbst oder Phenyl steht, das einfach bis vierfach, gleichartig oder verschieden substituiert ist durch Difluormethyl, Trifluormethyl, Trifluorethyl, Difluormethoxy, Trifluormethoxy, Difluorchlormethoxy, Trifluorethoxy, Difluormethylthio, Difluorchlormethylthio, Trifluormethylthio, Trifluormethylsulfinyl, Trifluormethylsulfonyl, Fluor, Chlor, Brom, Cyano, Nitro, Carbamoyl und/oder Thiocarbamoyl sowie durch einen zweifach verknüpften Rest der Formel -O-CH₂-O-, -O-CF₂-O-, -O-CH₂-CH₂-O-, -O-CFCl-CFCl-O-, 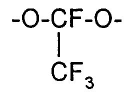 oder -O-CF₂-CF₂-O-; oder
(ii) Hetaryl mit 2 bis 10 C-Atomen und 1 bis 4 Heteroatomen aus der Reihe Stickstoff, Sauerstoff, Schwefel, wobei diese Hetarylreste einfach bis dreifach, gleichartig oder verschieden substituiert sein können durch Halogenalkyl, Halogenalkoxy, Halogenalkylthio, Halogenalkylsulfinyl oder Halogenalkylsulfonyl mit jeweils 1 oder 2 Kohlenstoffatomen und 1 bis 5 gleichen oder verschiedenen Halogenatomen, durch Halogen, Cyano, Nitro, Amino, Hydroxy, Carbamoyl und/oder Thiocarbamoyl, beispielsweise Pyrrolidinyl, Piperidinyl, Furyl, Thienyl, Pyrazolyl, Imidazolyl, 1,2,3- und 1,2,4-Triazolyl, Oxazolyl, Isoxazolyl, Thiazolyl, Isothiazolyl, 1,2,3-, 1,3,4-, 1,2,4- und 1,2,5-Oxadiazolyl, Azepinyl, Pyrrolyl, Isopyrrolyl, Pyridyl, Piperazinyl, Pyridazinyl, Pyrimidinyl, Pyrazinyl, 1,3,5-, 1,2,4-, 1,2,3-Triazinyl, 1,2,4-, 1,3,2-, 1,3,6- und 1,2,6-Oxazinyl, Oxepinyl, Thiepinyl, 1,2,4-Diazepinyl, Chinolyl, Isochinolyl, Chinazolyl, Chinoxalyl, Cinnolyl, Tetrazolyl, Indolyl, Indazolyl, Benzimidazolyl, Benzothienyl, Benzofuryl, Benzthiazolyl, Benzoxazolyl, Thiadiazolyl, Isothiadiazolyl, Oxadiazolyl und Isoxadiazolyl und deren Substitutionsprodukte.

Bevorzugtes Arylamino ist Anilino.

### Komponente A

Als Nickel-(O)-Verbindungen seien beispielhaft Ni(cyclooctadien)₂ und Ni(allyl)₂ genannt. Als Nickelverbindungen, die in situ in Nickel-(O)-Verbindungen übergeführt werden können, seien beispielsweise genannt: Ni-acetylacetonat, Nioctanoat und Ni-stearat, die mit Hilfe von üblichen Reduktionsmitteln, wie Boranat, Alanat, Aluminiumalkylen oder Lithiumorganylen, reduziert werden können.

### Komponente B

Vorzugsweise stehen R¹ bis R³ unabhängig voneinander für C₆-C₁₂-Aryl oder C₁-C₆-Alkyl.
- E: ist vorzugsweise Phosphor.

In einer bevorzugten Ausführungsform steht X für CH₂, CH-Phenyl, CH-Trimethylsilyl und C(CN)₂, CH-Vinyl, CH-Propenyl und CH-Styryl und für CH-Acyl, insbesondere CH-Formyl, CH-Acetyl, CH-Benzoyl, CH-Carbomethoxy, sowie für C(Acetyl)₂ und C(Benzoyl)₂, C(Trimethylsilyl)₂, NH, N-Methyl, N-Ethyl, N-Propyl, N-Butyl, N-t-Butyl, N-Trimethylsilyl, N-Triphenylsilyl, N-Phenyl, N-Tolyl, Sauerstoff.

### Komponente C

Vorzugsweise stehen R⁴ bis R⁶ unabhängig voneinander für C₆-C₁₂-Aryl oder C₁-C₆-Alkyl; R⁴ ist besonders bevorzugt C₆-C₁₂-Aryl.
- F: ist vorzugsweise Phosphor.
- R⁷ und R⁸: stehen unabhängig voneinander vorzugsweise für Wasserstoff, C₁-C₆-Alkyl, C₆-C₁₂-Aryl,
- R⁷: zusätzlich C₁-C₁₃-Acyl oder SO₃Na, SO₃-C₁-C₁₂-Alkyl,
- R⁸: zusätzlich OR¹² und zusätzlich
- R⁷ und R⁸: gemeinsam mit den beiden C-Atomen, an die sie gebunden sind, einen 5- oder 6-gliedrigen Ring bilden.

Als Verbindungen der Formel (II), worin R⁷ und R⁸ zusammen mit den beiden C-Atomen einen Ring bilden, können beispielsweise die Addukte aus einer chinoiden Verbindung oder Maleinsäureanhydrid mit einem Phosphin der Formel R⁴R⁵R⁶P eingesetzt werden.

### Umsetzungsprodukt aus A, gegebenenfalls B und C

Zur Herstellung des Katalysators werden pro Mol Nickel-(0)-Verbindung 0 bis 4 mol der Verbindung der Formel (I) und 1 bis 4 mol der Verbindung der Formel (II), bevorzugt pro Mol der Nickel-(0)-Verbindung etwa 1 mol der Verbindung der Formel (I) und etwa 1 mol der Verbindung der Formel (II) eingesetzt.

Die Temperatur zur Herstellung des Katalysators beträgt 0 bis 100°C, bevorzugt 20 bis 70°C. Bei der Herstellung wird unter Ausschluß von Sauerstoff, vorzugsweise in einem Lösungsmittel, das gegenüber den Reaktanden inert sein muß, wie Benzol, Toluol, Cyclohexan oder n-Hexan, gearbeitet. Nach seiner Herstellung wird der Katalysator als Feststoff gewöhnlich durch Filtrieren isoliert, wobei man nach Bedarf die Lösung zuvor einengt und/oder abkühlt. Der Katalysator kann jedoch auch ohne Isolierung, d.h. als Lösung oder Suspension, direkt zur erfindungsgemäßen Polymerisation eingesetzt werden.

Die bevorzugten Nickel-Verbindungen mit F = Phosphor und Y = Sauerstoff stehen nach den vorliegenden Erkenntnissen in Einklang mit dem Strukturmerkmal eines chelatisierenden Phosphor-Sauerstoff-Liganden der Formel

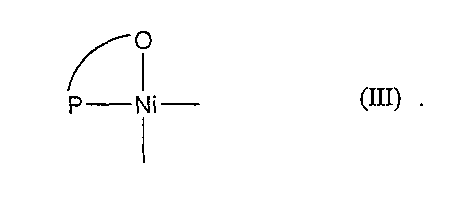

Nach einer besonders bevorzugten Ausführungsform werden Katalysatoren eingesetzt, zu deren Herstellung neben Komponente C (Formel II) auch Komponente B (Formel I) eingesetzt wird. Solche besonders bevorzugten Katalysatoren entsprechen der Formel (IV) 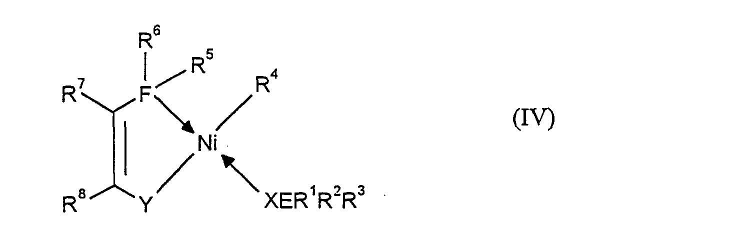 worin
- E, F, X, Y und R¹ bis R⁸: die oben genannten Bedeutungen besitzen. Besonders bevorzugte Katalysatoren sind Verbindungen der Formel (IV), worin E und F Phosphor,
- X: Sauerstoff, NR⁹, CR⁹R¹⁰ und
- Y: Sauerstoff oder NR⁹ bedeuten.

Die meisten der erfindungsgemäß zu verwendenden Katalysatoren und die Verfahren zu ihrer Herstellung sind aus den EP-PS 101 927, 137 389, 193 047 bekannt oder können, sofern noch nicht in der Literatur beschrieben, analog den bekannten Verfahren hergestellt werden.

Die erfindungsgemäß zu verwendenden Umsetzungsprodukte aus A, C und gegebenenfalls B können als alleinige Polymerisationskatalysatoren eingesetzt werden. Häufig zeigt sich aber, daß die Mitverwendung von Cokatalysatoren ein weiter verbessertes Resultat ergibt.

Als Cokatalysatoren kommen prinzipiell Verbindungen mit saurem Charakter (sowohl Lewis- als auch Brönstedt-Säuren) in Frage. Solche sauren Verbindungen umfassen z.B. Aluminiumhalogenorganyle wie RAlCl₂, R₂AlCl, R₃Al₂Cl₃ (jeweils R = C₁-C₂₀-, vorzugsweise C₁-C₄-Alkyl). Bevorzugte Cokatalysatoren sind auch die in der US-PS 5 155 188 beschriebenen Verbindungen der Formeln

(RₙMO)ₐR¹ _{b}AlX_{c} bzw. (RO)ₐR¹AlX_{c}

worin
- m: Silicium, Zinn, Germanium, Blei oder Aluminium,
- R, R¹: unabhängig voneinander Alkyl, Alkylen, Alkinyl, Aryl, Aralkyl, Aralkylen oder Aralkinyl mit je bis zu 18 C-Atomen, vorzugsweise C₁-C₃-Alkyl oder Phenyl und - falls M = Al - entweder R oder R¹ Halogen,
- X: Chlor, Fluor, Brom oder Iod, vorzugsweise Chlor,
- a: 0,5 bis 2,5, vorzugsweise 1 bis 0,75,
- b: 0,25 bis 2, vorzugsweise 0,5 bis 1,
- c: Null bis 2, vorzugsweise 0,72 bis 1,25,
- a+b+c: 3,
- n: 2 (falls M = Al) oder 3,
bedeuten.

Durch Ersatz der Gruppen (RO) durch R₃SiO lassen sich effektive Siloxygruppenhaltige Cokatalysatoren herstellen.

Weitere bevorzugte Cokatalysatoren sind Aluminoxane, d.h. 1:1-Umsetzungsprodukte von Aluminiumorganylen mit Wasser, z.B. Methylaluminoxan (MAO).

Die Aktivierung gelingt weiterhin allgemein durch Einführung (zumeist voluminöser) schwach- oder nicht-koordinierender Anionen in das Ligandenfeld des Zentralmetalls, so daß nach heuristischer Betrachtung eine Koordinationsstelle für die Wechselwirkung mit dem zu polymerisierenden Monomer leicht freigemacht wird oder verfügbar ist.

Die Erzeugung solcher Anionen in der Umgebung des Zentralmetalls gelingt etwa durch Umsetzung mit Brönstedt-Säuren HX, wobei X z.B. Trifluormethylsulfonat sein kann. Andere cokatalytisch geeignete Anionen sind etwa PF₆⁻, SbF₆⁻, SnCl₃⁻ und Perchlorat.

Zur Einführung solcher Anionen können auch Salze des jeweiligen Anions verwendet werden, z.B. Alkali-, Erdalkali-, Thallium-, Silber-, Phosphonium- und Ammoniumsalze.

Weitere bevorzugte Cokatalysatoren umfassen Borverbindungen vom Typ BR₃ wie Tris-(pentafluorphenyl)-boran oder vom Typ HBR₄, wobei BR₄ Tetrafluorborat, Tetraphenylborat oder Tetrakis-[3,5-di-(trifluormethyl)-phenyl]-borat bedeutet.

Weiterhin bevorzugt sind die Salze solcher Borate Kat⁺BR₄⁻, deren Kationen Kat⁺ etwa aus Na, K, Li, Mg, Ca, Ag, Tl, Triphenylmethyl, N⁺(C₁-C₁₂-Alkyl)₄ und insbesondere N,N-Dialkyl-anilinium-Ionen ausgewählt sind.

Katalysator und Cokatalysator können getrennt oder gemeinsam zugesetzt werden. Während der Reaktion können Katalysator und Cokatalysator in Form eines Komplexes vorliegen. Es ist möglich, diesen Komplex in situ zu bilden oder in einer getrennten Reaktion zu bilden und in dieser vorgebildeten Form (in Lösung) oder isolierte (als Feststoff) der Reaktion zugegeben werden.

Mit den erfindungsgemäßen Katalysatoren zu polymerisierende Cycloolefine umfassen alle Cycloolefine, wie z.B. Cyclobuten, Cyclopenten, Cyclopentadien, aber auch polycyclische Cycloolefine, wie sie beispielsweise in EP-A-608 903 beschrieben sind, also
Bicyclo-2-heptene,
Tricyclo-3-decene,
Tricyclo-3-undecene,
Tetracyclo-3-dodecene,
Pentacyclo-4-pentadecene,
Pentacyclopentadecadiene,
Pentahydro-3-pentadecene,
Pentacyclo-4-hexadecene,
Pentacyclo-3 -hexadecene,
Hexacyclo-4-heptadecene,
Heptacyclo-5-eicocene,
Heptacyclo-4-eicocene,
Heptacyclo-5-heneicocene,
Octacyclo-5-dococene,
Nonacyclo-5-pentacosene,
Nonacyclo-6-hexacosene,
Cyclopentadien/Acenaphthylen-Addukte,
1,4-Methano-1.4.4a.9a-tetrahydrofluorene und
1 ,4-Methano-1.4.4a.5.10.10a-hexahydroanthracene,
wie z.B.
Bicyclo[2.2.1]hept-2-en,
6-Methylbicyclo[2.2.1]hept-2-en,
5,6-Dimethylbicyclo[2.2.1]hept-2-en,
1-Methylbicyclo[2.2.1]hept-2-en,
6-Ethylbicyclo[2.2.1]hept-2-en,
6-n-Butylbicyclo[2.2.1]hept-2-en,
6-Isobutylbicyclo[2.2.1]hept-2-en,
7-Methylbicyclo[2.2.1]hept-2-en,
Tricyclo[4.3.0.1^{2,5}]-3-decen,
2-Methyltricyclo[4.3.0.1^{2,5}]-3-decen,
5-Methyltricyclo[4.3.0.1^{2,5}]-3-decen,
Tricyclo[4.3.0.1^{2,5}]-3-undecen,
10-Methyltricyclo[4.4.0.1^{2,5}]-3-undecen,
Tetracyclo[4.4.0.1^{2,5}.1^{7,10}]-3-deodecen,
8-Methyltetracyclo[4.4.0.1^{2,5}.1^{7,10}]-3-dodecen,
8-Ethyltetracyclo[4.4.0.1^{2,5}.1^{7,10}]-3-dodecen,
8-Propyltetracyclo[4.4.0.1^{2,5}.1^{7,10}]-3-dodecen,
8-Butyltetracyclo[4.4.0.1^{2,5}.1^{7,10}]-3-dodecen,
8-Isobutyltetracyclo[4.4.0.1^{2,5}.1^{7,10}]-3-dodecen,
8-Hexyltetracyclo[4.4.0.1^{2,5}.1^{7,10}]-3-dodecen,
8-Cyclohexyltetracyclo[4.4.0.1^{2,5}.1^{7,10}]-3-dodecen,
8-Stearyltetracyclo[4.4.0.1^{2,5}.1^{7,10}]-3-dodecen,
5,10-Dimethyltetracyclo[4.4.0.1^{2,5}.1^{7,10}]-3-dodecen,
2,10-Dimethyltetracyclo[4.4.0.1^{2,5}.1^{7,10}]-3-dodecen,
8,9-Dimethyltetracyclo[4.4.0.1^{2,5}.1^{7,10}]-3-dodecen,
8-Methyl-9-ethyltetracyclo[4.4.0.1^{2,5}.1^{7,10}]-3-dodecen,
11,12-Dimethyltetracyclo[4.4.0.1^{2,5}.1^{7,10}]-3-dodecen,
2,7,9-Trimethyltetracyclo[4.4.0.1^{2,5}.1^{7,10}]-3-dodecen,
9-Ethyl-2,7-dimethyltetracyclo[4.4.0.1^{2,5}.1^{7,10}]-3-dodecen,
9-Isobutyl-2,7-dimethyltetracyclo[4.4.0.1^{2,5}.1^{7,10}]-3-dodecen,
9,11,12-Trimethyltetracyclo[4.4.0.1^{2,5}.1^{7,10}]-3-dodecen,
9-Ethyl-11,12-dimethyltetracyclo[4.4.0.1^{2,5}.1^{7,10}]-3-dodecen,
9-Isobutyl-11,12-dimethyltetracyclo[4.4.0.1^{2,5}.1^{7,10}]-3-dodecen,
5,8,9,10-Tetramethyltetracyclo[4.4.0.1^{2,5}.1^{7,10}]-3-dodecen,
8-Ethylidentetracyclo[4.4.0.1^{2,5}.1^{7,10}]-3-dodecen,
8-Ethyliden-9-methyltetracyclo[4.4.0.1^{2,5}.1^{7,10}]-3-dodecen,
8-Ethyliden-9-ethyltetracyclo[4.4.0.1^{2,5}.1^{7,10}]-3-dodecen,
8-Ethyliden-9-isopropyltetracyclo[4.4.0.1^{2,5}.1^{7,10}]-3-dodecen,
8-Ethyliden-8-butyltetracyclo[4.4.0.1^{2,5}.1^{7,10}]-3-dodecen,
8-n-Propylidentetracyclo[4.4.0.1^{2,5}.1^{7,10}]-3-dodecen,
8-n-Propyliden-9-methyltetracyclo[4.4.0.1^{2,5}.1^{7,10}]-3-dodecen,
8-n-Propyliden-9-ethyltetracyclo[4.4.0.1^{2,5}.1^{7,10}]-3-dodecen,
8-n-Propyliden-9-isopropyltetracyclo[4.4.0.1^{2,5}.1^{7,10}]-3-dodecen,
8-n-Propyliden-9-butyltetracyclo[4.4.0.1^{2,5}.1^{7,10}]-3-dodecen,
8-Isopropylidentetracyclo[4.4.0.1^{2,5}.1^{7,10}]-3-dodecen,
8-Isopropyliden-9-methyltetracyclo[4.4.0.1^{2,5}.1^{7,10}]-3-dodecen,
8-Isopropyliden-9-ethyltetracyclo[4.4.0.1^{2,5}.1^{7,10}]-3-dodecen,
8-Isopropyliden-9-isopropyltetracyclo[4.4.0.1^{2,5}.1^{7,10}]-3-dodecen,
8-Isopropyliden-9-butyltetracyclo[4.4.0.1^{2,5}.1^{7,10}]-3-dodecen,
8-Chlortetracyclo[4.4.0.1^{2,5}.1^{7,10}]-3-dodecen,
8-Bromtetracyclo[4.4.0.1^{2,5}.1^{7,10}]-3-dodecen,
8-Fluortetracyclo[4.4.0.1^{2,5}.1^{7,10}]-3-dodecen,
8,9-Dichlortetracyclo[4.4.0.1^{2,5}.1^{7,10}]-3-dodecen,
Pentacyclo[6.5.1.1^{3,6}.0^{2,7}.0^{9,13}]-4-pentadecen,
1,3-Dimethylpentacyclo[6.5.1.1^{3,6}.0^{2,7}.0^{9,13}]-4-pentadecen,
1,6-Dimethyl[6.5.1.1^{3,6}.0^{2,7}.0^{9,13}]-4-pentadecen,
14,15-Dimethyl[6.5.1.1^{3,6}.0^{2,7}.0^{9,13}]-4-pentadecen,
Pentacyclo[7.4.0.1^{2,5}.1^{9,12}.0^{8,13}]-3-pentadecen,
Methyl-substituierte Pentacyclo[7.4.0.1^{2,5}.1^{9,12}.0^{8,13}]-3-pentadecen,
Pentacyclo[6.5.1.1^{3,6}.0^{2,7}.0^{9,13}]-4,10-pentadecadien,
Pentacyclo[8.4.0.1^{2,5}.1^{9,12}.0^{8,13}]-3-hexadecen,
11-Methylpentacyclo[8.4.0.1^{2,5}.1^{9,12}.0^{8,13}]-3-hexadecen,
11-Ethyl[8.4.0.1^{2,5}.1^{9,12}.0^{8,13}]-3-hexadecen,
10,11-Dimethyl[8.4.0.1^{2,5}.1^{9,12}.0^{8,13}]-3-hexadecen,
Pentacyclo[6.6.1.1^{3,6}.0^{2,7}.0^{9,14}]-4-hexadecen,
1,3-Dimethylpentacyclo[6.6.1.1^{3,6}.0^{2,7}.0^{9,14}]-4-hexadecen,
15,16-Dimethylpentacyclo[6.6.1.1^{3,6}.0^{2,7}.0^{9,14}]-4-hexadecen,
Hexacyclo[6.6.1.1^{3,6}.1^{10,13}.0^{2,7}.0^{9,14}]-4-heptadecen,
12-Methylhexacyclo[6.6.1.1^{3,6}.1^{10,13}.0^{2,7}.0^{9,14}]-4-heptadecen,
12-Ethylhexacyclo[6.6.1.1^{3,6}.1^{10,13}.0^{2,7}.0^{9,14}]-4-heptadecen,
12-Isobutylhexacyclo[6.6.1.1^{3,6}.1^{10,13}.0^{2,7}.0^{9,14}]-4-heptadecen,
1,6,10-Trimethylhexacyclo[6.6.1.1^{3,6}.1^{10,13}.0^{2,7}.0^{9,14}]-4-heptadecen,
Heptacyclo[8.7.0.1^{2,9}.1^{4,7}.1^{11,17}.0^{3,8}.0^{12,16}]-5-eicosen,
Heptacyclo[8.7.0.1^{3,6}.1^{10,17}.1^{12,15}.0^{2,7}.0^{11,16}]-4-eicosen und seine dimethylsubstituierten Derivate,
Heptacyclo[8.8.0.1^{2,9}.1^{4,7}.1^{11,18}.0^{3,8}.0^{12,17}]-5-heneicosen,
Heptacyclo[8.8.0.1^{4,7}.1^{11,18}.1^{13,16}.0^{3,8}.0^{12,17}]-5-heneicosen und seine trimethylsubstituierten Derivate,
15-Methylheptacyclo[8.8.0.1^{4,7}.1^{11,18}.1^{13,16}.0^{3,8}.0^{12,17}]-5-heneicosen,
5-Phenyl-bicyclo[2.2.1]hept-2-en,
5-Methyl-5-phenyl-bicyclo[2.2.1]hept-2-en,
5-Benzyl-bicyclo[2.2.1]hept-2-en,
5-Tolyl-bicyclo[2.2.1]hept-2-en,
2-(Ethylphenyl)-bicyclo[2.2.1]hept-2-en,
5-(Isopropylphenyl)-bicyclo[2.2.1]hept-2-en,
5-Biphenyl-bicyclo[2.2.1]hept-2-en,
5-(ß-Naphthyl)-bicyclo[2.2.1]hept-2-en,
5-(α-Naphthyl)-bicyclo[2.2.1]hept-2-en,
5-(Anthracenyl)-bicyclo[2.2.1]hept-2-en,
5,6-Diphenyl-bicyclo[2.2.1]hept-2-en,
1,4-Methano-1.4.4a.9a-tetrahydrofluoren,
1,4-Methano-1.4.4a.5.10.10a-hexahydroanthracen,
8-Phenyltetracyclo[4.4.0.1^{2,5}.1^{7,10}]-3-dodecen,
8-Methyl-8-phenyltetracyclo[4.4.0.1^{2,5}.1^{7,10}]-3-dodecen,
8-Benzyl-tetracyclo[4.4.0.1^{2,5}.1^{7,10}]-3-dodecen,
8-Tolyl-tetracyclo[4.4.0.1^{2,5}.1^{7,10}]-3-dodecen,
8-(Ethylphenyl)-tetracyclo[4.4.0.1^{2,5}.1^{7,10}]-3-dodecen,
8-(Isopropylphenyl)-tetracyclo[4.4.0.1^{2,5}.1^{7,10}]-3-dodecen,
8,9-Diphenyl-tetracyclo[4.4.0.1^{2,5}.1^{7,10}]-3-dodecen,
8-(Biphenyl)-tetracyclo[4.4.0.1^{2,5}.1^{7,10}]-3-dodecen,
8-(β-Naphthyl)-tetracyclo[4.4.0.1^{2,5}.1^{7,10}]-3-dodecen,
8-(α-Naphthyl)-tetracyclo[4.4.0.1^{2,5}.1^{7,10}]-3-dodecen und
8-(Anthracenyl)-tetracyclo[4.4.0.1^{2,5}.1^{7,10}]-3-dodecen.

Bevorzugte Cycloolefine sind auch solche, die durch Halogen, -CF₃, -N(C₁-C₃₀-Alkyl)₂, -CN, C₁-C₁₂-Alkoxy oder C₁-C₂₀-Alkylen-COOC₁-C₂₀-alkyl, vorzugsweise ein- bis dreimal pro Molekül substituiert sind.

Die Cycloolefine können auch in Gegenwart von acyclischen Mono- oder Diolefinen, Alkinen und Kohlenmonoxid polymerisiert werden. Geeignete acyclische Olefine umfassen C₂-C₄₀-α-Olefine und C₄-C₂₄-Diolefine, wie z.B. Ethylen, Propylen, 1-Buten, 1-Penten, 1-Hexen, 3-Methyl-1-buten, 3-Methyl-1-penten, 4-Methyl-1-penten, 4-Methyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen und Mischungen dieser α-Olefine sowie 1,4-Butadien, Isopren, 1,4-Pentadien, 1,5-Hexadien, 1,6-Heptadien, 1,7-Octadien, 1,8-Nonadien, 1,9-Decadien, 1,11-Dodecadien, 1,19-Eicodien und Mischungen dieser Diolefine. Auch Mischungen von α.Olefinen und Diolefinen sind geeignet.

Solche Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Chloropren, Styrol, Methylstyrol, Chlorstyrol, Fluorstyrol, Inden, 4-Vinyl-biphenyl, Vinylfluoren, Vinylanthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen, 1,5-Hexadien, 1,6-Octadien, Methylmethacrylat, ε-Caprolacton, δ-Valerolacton und Acetylen.

Die Katalysatoren und gegebenenfalls Cokatalysatoren können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, Cellulosederivate, Stärke und Polymere.

Die Polymerisation kann in Lösung, Slurry, in der Gasphase oder in Masse durchgeführt werden. Dabei ist es sowohl möglich kontinuierlich oder diskontinuierlich zu arbeiten. Der Katalysator kann vorgelegt und Monomer zudosiert werden. Es kann aber auch Monomer vorgelegt und der Katalysator zudosiert werden. Ebenso ist es möglich, Katalysator und Monomer vorzulegen oder Katalysator und Monomer in zwei getrennten Strömen in die Reaktionszone zu bringen.

Die Polymerisation mit Hilfe der erfindungsgemäß zu verwendenden Katalysatoren wird vorzugsweise unter Ausschluß von Wasser und Sauerstoff erfolgen. Für die Polymerisation in Lösung geeignete organische Lösungsmittel umfassen Aromaten wie Toluol, Chlorbenzol, Nitrobenzol, chlorierte aliphatische Kohlenwasserstoffe wie Dichlormethan und deren Mischungen. Die erfindungsgemäß zu verwendenden Katalysatoren können bei einem Batch-Verfahren in Mengen von einem Molverhältnis von 10⁻² bis 10⁻⁸, bezogen auf zu polymerisierende Monomere, eingesetzt werden. Für den Fall, daß Cokatalysatoren mitverwendet werden sollen, beträgt das Molverhältnis Katalysator/Cokatalysator in der Regel 1 bis 10⁻⁶, vorzugsweise 10⁻¹ bis 10⁻⁴ (bei Aluminium-haltigen Cokatalysatoren) bzw. 1 bis 10⁻¹ (bei Bor-haltigen Cokatalysatoren).

Die Polymerisationen können bei Temperaturen von -20 bis 200°C, vorzugsweise +20 bis 160°C, durchgeführt werden.

Die Polymeren können durch Nichtlösemittel, wie z.B. Methanol, ausgefällt und dann getrocknet werden.

### Beispiele

### Beispiele 1 bis 3

### Bedingungen

| | |
|---|---|
| Cycloolefin | Norbornen |
| Menge | 100 mMol |
| Lösungsmittel | Chlorbenzol |
| Menge | 100 ml |
| Cokatalysator | hydrolysiertes Trimethylaluminium (MAO) |
| Menge | 1 mMol |
| Temperatur | 80°C |
| Polymerisationsdauer | 1 Stunde |

Die Ergebnisse zeigt die nachfolgende Tabelle 1:

**Tabelle 1**

| Beispiel | Katalysator (mmol) | Ausbeute (g/%) | Aktivität (t/mol*h) | Grenzviskosität* η(dl/g) | Thermo-Mechan. Analyse TMA Erweichungstemperatur (°C) | DSC Zersetzungstemp. (°C) |
|---|---|---|---|---|---|---|
| 1 | NiPh(Ph₂PCHCPhO)(iPr₃PCHPh) 0.001 | 8.6/91.5 | 8.6 | 1.57 | 313 | 463 |
| 2 | NiPh(Ph₂PCHCMeO)(iPr₃PCHPh) 0.001 | 8.9/94.7 | 8.9 | 1.60 | 377 | 460 |
| 3 | NiPh(Ph₂PCHCMeO)(Ph₃PCH₂) 0.001 | 5.8/61.7 | 5.8 | 1.40 | 280 | 451 |

| | | | | | | |
|---|---|---|---|---|---|---|
| * gemessen in Trichlorethylen bei 25°C | | | | | | |

### Beispiele 4 bis 7

Analog den Beispielen 1 bis 3 wurde Norbornen mit erfindungsgemäß zu verwendendem Katalysator aus Beispiel 1 unter Variation von Temperatur und Monomer/Katalysator-Verhältnis (Beispiel 5) polymerisiert. In allen Fällen wurden hohe Katalysatoraktivitäten von bis zu 18.6 t/mol.h erzielt. Durch die Temperatur lassen sich die erzielbaren Molmassen/Grenzviskositäten steuern.

Die Ergebnisse sind in Tabelle 2 zusammengestellt.

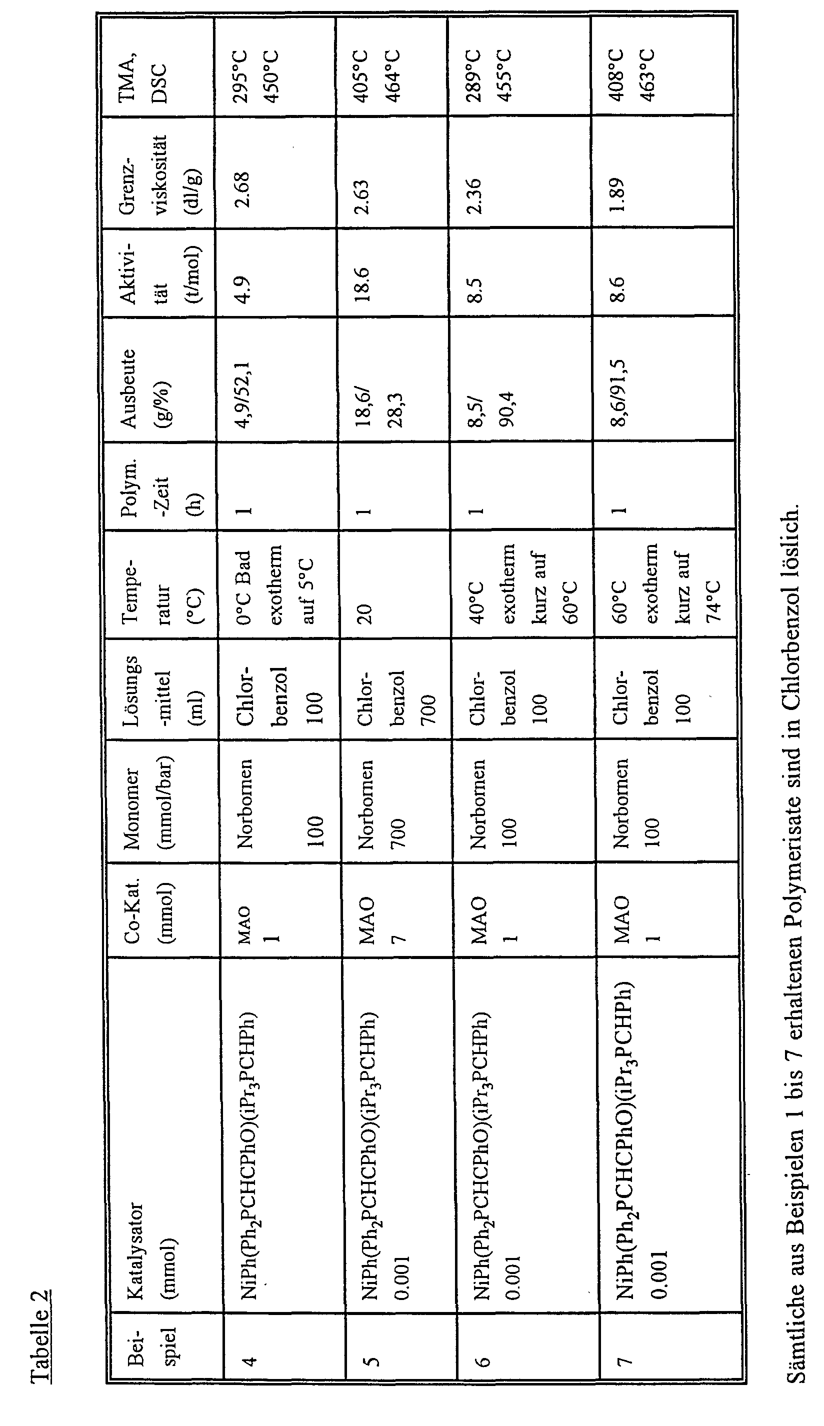

## Patentansprüche

1. Verwendung von Umsetzungsprodukten aus
A. einer Nickel-(O)-Verbindung oder einer Verbindung, die in situ in eine Nickel-(O)-Verbindung übergeführt werden kann, mit gegebenenfalls
B. einer Verbindung der Formel 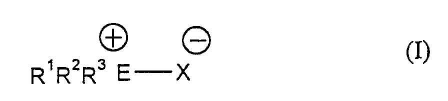 und (obligatorisch)
C. einer Verbindung der Formel 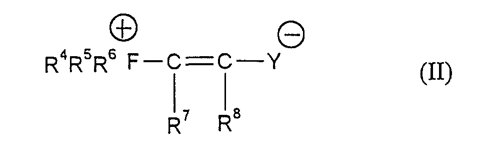 als Katalysatoren für die Polymerisation von Cycloolefinen,
wobei
R¹ bis R⁶ unabhängig voneinander geradkettiges oder verzweigtes C₁-C₂₀-Alkyl, C₆-C₁₂-Aryl, C₁-C₂₀-Alkoxy, C₃-C₈-Cycloalkyl, C₂-C₂₀-Alkenyl, Di-(C₁-C₄-alkyl)-amino, C₆-C₁₂-Aryloxy, C₇-C₁₅-Aralkyl oder C₇-C₁₅-Aralkoxy,
E und F unabhängig voneinander Stickstoff, Phosphor, Arsen oder Antimon,
X Sauerstoff, Schwefel, =NR⁹, =CR⁹R¹⁰, =C=C=O, =C=C=S, =C=PR¹R²R³,
Y Sauerstoff oder NR⁹,
R⁷, R⁸ unabhängig voneinander Wasserstoff, C₁-C₂₀-Alkyl, C₂-C₂₀-Alkenyl, C₁-C₂₀-Alkoxy, C₃-C₈-Cycloalkyl, C₆-C₁₂-Aryl, C₆-C₁₂-Aryloxy, C₆-C₁₂-Ar-C₁-C₂₀-alkyl, C₆-C₁₂-Ar-C₁-C₂₀-alkoxy, C₁-C₂₀-Alkyl-C₆-C₁₂-aryl, C₁-C₂₀-Alkyl-C₆-C₁₂-aryloxy, Chlor, Cyan, NHR¹², NR¹²₂, OR¹², COOR¹², COOR¹¹, CONR¹², COR¹², SR¹², SO₂R¹², OSO₂R¹², P(O)(OR¹²)_{2-y}R¹³_{y},
R⁷ zusätzlich SO₃R¹¹ oder
R⁷ und R⁸ gemeinsam mit den beiden C-Atomen, an die sie gebunden sind, einen iso- oder heterocyclischen Ring bilden,
R⁹ und R¹⁰ unabhängig voneinander R¹ oder Wasserstoff, Silyl, Acyl, Chlorphenyl, Nitrophenyl, C₁-C₆-Alkylphenyl, Cyano, Phenyl-C₂-C₆-alkenyl, Trihalogensilyl, Tri-C₁-C₃₀-organylsilyl, C₁-C₁₆-Acyl, Cyan, Halogen, Tri-C₁-C₃₀-organylstannyl, -BH₂, Di-C₁-C₂₀-organylboranyl, Dihalogenboranyl,
R¹¹ Alkalimetall, Thallium, 1/2 Erdalkalimetall, Ammonium, Phosphonium, C₁-C₁₂-Alkyl oder C₆-C₁₂-Aryl,
R¹², R¹³ unabhängig voneinander C₁-C₂₀-Alkyl, C₂-C₂₀-Alkenyl, C₃-C₈-Cycloalkyl oder C₆-C₁₂-Aryl und
y Null, 1 oder 2
bedeuten.

2. Verwendung nach Anspruch 1, wonach das Umsetzungsprodukt das Strukturmerkmal 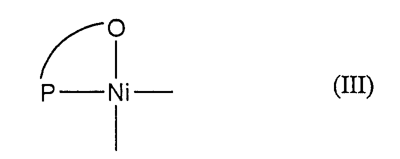 aufweist.

3. Verwendung nach Anspruch 1, wonach das Umsetzungsprodukt der Formel 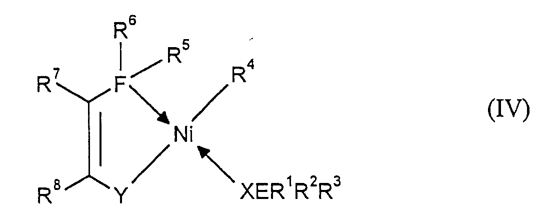 entspricht,
worin
E, F, X, Y und R¹ bis R⁸ die in Anspruch 1 angegebenen Bedeutungen besitzen.

4. Verwendung nach Anspruch 1 in Gegenwart eines sauren Cokatalysators.

5. Verwendung nach Anspruch 1 bei einer Temperatur von -20 bis 200°C.

## Claims

1. Use of reaction products of
A. a nickel-(O) compound or a compound that can be converted *in situ* into a nickel-(O) compound, with optionally
B. a compound of formula 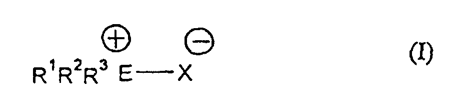 and (compulsorily)
C. a compound of formula 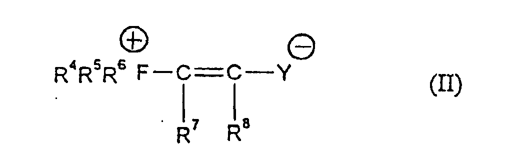 as catalysts for the polymerisation of cycloolefins,
wherein
R¹ to R⁶ each independently of the others represents straight-chain or branched C₁-C₂₀-alkyl, C₆-C₁₂-aryl, C₁-C₂₀-alkoxy, C₃-C₈-cycloalkyl, C₂-C₂₀-alkenyl, di-(C₁-C₄-alkyl)-amino, C₆-C₁₂-aryloxy, C₇-C₁₅-aralkyl or C₇-C₁₅-aralkoxy,
E and F each independently of the other represents nitrogen, phosphorus, arsenic or antimony,
X represents oxygen, sulfur, =NR⁹, =CR⁹R¹⁰, =C=C=O, =C=C=S, =C=PR¹R²R³,
Y represents oxygen or NR⁹,
R⁷, R⁸ each independently of the other represents hydrogen, C₁-C₂₀-alkyl, C₂-C₂₀-alkenyl, C₁-C₂₀-alkoxy, C₃-C₈-cycloalkyl, C₆-C₁₂-aryl, C₆-C₁₂-aryloxy, C₆-C₁₂-Ar-C₁-C₂₀-alkyl, C₆-C₁₂-Ar-C₁-C₂₀-alkoxy, C₁-C₂₀-alkyl-C₆-C₁₂-aryl, C₁-C₂₀-alkyl-C₆-C₁₂-aryloxy, chlorine, cyano, NHR¹², NR¹²₂, OR¹², COOR¹², COOR¹¹, CONR¹², COR¹², SR¹², SO₂R¹², OSO₂R¹², P(O)(OR¹²)_{2-y}R¹³_{y},
R⁷ additionally represents SO₃R¹¹ or
R⁷ and R⁸, together with the two carbon atoms to which they are bonded, form an isocyclic or heterocyclic ring,
R⁹ and R¹⁰ each independently of the other represents R¹ or hydrogen, silyl, acyl, chlorophenyl, nitrophenyl, C₁-C₆-alkylphenyl, cyano, phenyl-C₂-C₆-alkenyl, trihalosilyl, tri-C₁-C₃₀-organylsilyl, C₁-C₁₆-acyl, cyano, halogen, tri-C₁-C₃₀-organylstannyl, -BH₂, di-C₁-C₂₀-organylboranyl, dihaloboranyl,
R¹¹ represents alkali metal, thallium, ½ alkaline earth metal, ammonium, phosphonium, C₁-C₁₂-alkyl or C₆-C₁₂-aryl,
R¹², R¹³ each independently of the other represents C₁-C₂₀-alkyl, C₂-C₂₀-alkenyl, C₃-C₈-cycloalkyl or C₆-C₁₂-aryl, and
y represents zero, 1 or 2.

2. Use according to claim 1, according to which the reaction product has the structural feature

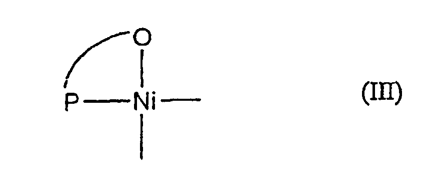

3. Use according to claim 1, according to which the reaction product corresponds to formula 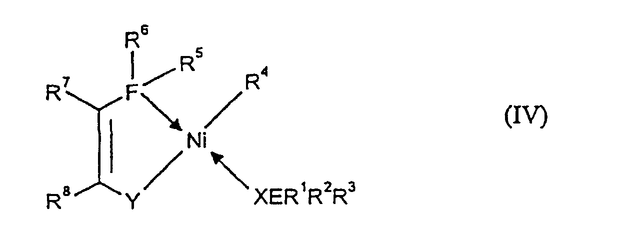 wherein
E, F, X, Y and R¹ to R⁸ are as defined in claim 1.

4. Use according to claim 1 in the presence of an acid co-catalyst.

5. Use according to claim 1 at a temperature of from -20 to 200°C.

## Revendications

1. Utilisation des produits de la réaction de :
A. un composé du nickel (0) ou d'un composé qui peut être converti in situ en composé du nickel (0), avec le cas échéant,
B. un composé de la formule : 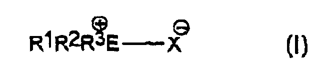 et (obligatoirement)
C. un composé de la formule : 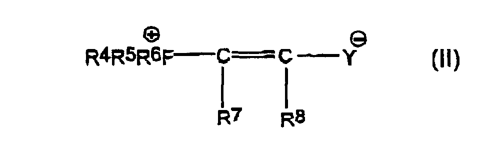
comme catalyseurs pour la polymérisation de cyclooéfines, où
R¹ à R⁶ représentent indépendamment l'un de l'autre, un radical alcoyle en C₁-C₂₀ à chaîne droite ou ramifiée, aryle C₆-C₁₂, alcoxy en C₁-C₂₀, cycloalcoyle en C₃-C₈, alcényle en C₂-C₂₀, di(alcoyl en C₁-C₄)amino, aryloxy en C₆-C₁₂, aralcoyle en C₇-C₁₅ ou aralcoxy en C₇-C₁₅ ;
E et F représentant indépendamment l'un de l'autre, l'atome d'azote, de phosphore, d'arsenic ou d'antimoine ;
X représente l'atome d'oxygène, de soufre, un radical =NR⁹, =CR⁹R¹⁰, =C=C=O, =C=C=S, =C=PR¹R²R³ ;
Y représente l'atome d'oxygène ou un radical NR⁹ ;
R⁷ et R⁸ représentent indépendamment l'un de l'autre, l'atome d'hydrogène, un radical alcoyle en C₁-C₂₀, alcényle en C₂-C₂₀, alcoxy en C₁-C₂₀, cycloalcoyle en C₃-C₈, aryle C₆-C₁₂, aryloxy en C₆-C₁₂, (aryl en C₆-C₁₂)alcoyle en C₁-C₂₀, (aryl en C₆-C₁₂)alcoxy en C₁-C₂₀, (alcoyl en C₁-C₂₀)aryle en C₆-C₁₂, (alcoyl en C₁-C₂₀)aryloxy en C₆-C₁₂, l'atome de chlore, le radical cyano, un radical NHR¹², N(R¹²)₂, OR¹², COOR¹², COOR¹¹, CONR¹², COR¹², SR¹², SO₂R¹², OSO₂R¹², P (O) (OR¹²)_{2-y}R¹³_{y},
R⁷ représente en outre, SO₃R¹¹, ou
R⁷ et R⁸ forment ensemble, avec les deux atomes C sur lesquels ils sont liés, un iso- ou hétérocycle ;
R⁹ et R¹⁰ représentent indépendamment l'un de l'autre, le radical R¹ ou l'atome d'hydrogène, un radical silyle, acyle, chlorophényle, nitrophényle, (alcoyl en C₁-C₆)phényle, cyano, phényl(alcényle en C₂-C₆), trihalogénosilyle, tri(organyl en C₁-C₃₀)silyle, acyle en C₁-C₁₆, cyano, halogène, tri(organyl en C₁-C₃₀)stannyle, -BH₂, di(organyl en C₁-C₂₀)boranyle, dihalogénoboranyle ;
R¹¹ représente un métal alcalin, l'atome de thallium, ½ métal alcalino-terreux, un radical ammonium, phosphonium, alcoyle en C₁-C₁₂ ou aryle en C₆-C₁₂ ;
R¹², R¹³ représentent indépendamment l'un de l'autre, un radical alcoyle en C₁-C₂₀, alcényle en C₂-C₂₀, cycloalcoyle en C₃-C₈ ou aryle C₆-C₁₂, et
y est zéro, 1 ou 2.

2. Utilisation suivant la revendication 1, où le produit de réaction présente la caractéristique structurale :

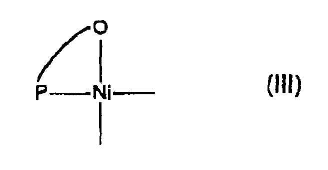

3. Utilisation suivant la revendication 1, où le produit de réaction correspond à la formule : 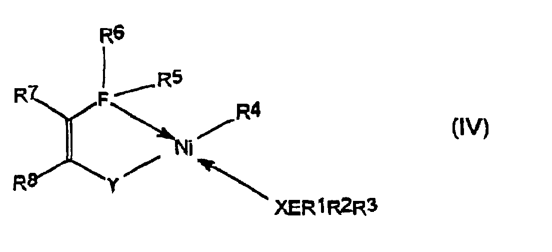 où
E, F, X, Y et R¹ à R⁸ possèdent les significations indiquées à la revendication 1.

4. Utilisation suivant la revendication 1, en présence d'un cocatalyseur acide.

5. Utilisation suivant la revendication 1, à une température allant de -20 à 200°C.
